# EUROPÄISCHE PATENTSCHRIFT

(11) **EP 2 606 283 B1**
(45) Veröffentlichungstag und Bekanntmachung des Hinweises auf die Patenterteilung: **02.08.2017**
(21) Anmeldenummer: 11744020.6
(22) Anmeldetag: 16.08.2011
(51) Int. Cl.: F24C 15/04, F24C 15/08, F24C 15/10, F25D 23/02, A47L 15/42, D06F 39/14, B32B 3/26, B32B 3/04, E06B 5/00, F24C 7/04

(54) **HAUSHALTSGERÄT**
HOUSEHOLD APPLIANCE
APPAREIL MÉNAGER

(30) Priorität: 20.08.2010 DE 102010039591
(43) Veröffentlichungstag der Anmeldung: 26.06.2013
(73) Patentinhaber: BSH Hausgeräte GmbH, 81739 München (DE)
(72) Erfinder: WILSDORF, Gerd, 82140 Olching (DE); BAACKE, Sven, 80802 München (DE); FLESCH, Sebastien, F-67150 Gerstheim (FR)
(74) Vertreter: Lang, Michael
(86) Internationale Anmeldenummer: PCT/EP2011/064056
(87) Internationale Veröffentlichungsnummer: WO 2012/022726

(56) Entgegenhaltungen:
- EP-A2- 2 159 489
- DE-A1-102009 047 687
- DE-C1- 4 103 664
- DE-U1-202005 010 946
- JP-A- 2006 046 862

## Beschreibung

Die Erfindung bezieht sich auf ein Hausgerät mit einer Trägerbaugruppe. Ebenfalls bezieht sich die Erfindung auf ein Kochfeld und eine Gargerätetür.

Bei der Trägerbaugruppe kann es sich beispielsweise um ein Gehäusebauteil eines Gargeräts handeln. Die Trägerbaugruppe ist dabei zumindest von einer Seite her sichtbar und muss deshalb besonderen ästhetischen Anforderungen genügen. Weiter kann die Trägerbaugruppe zur Befestigung von Glasplatten oder Glaskeramikplatten dienen.

Im Bereich der Hausgeräte, insbesondere der Gargeräte, werden Glasplatten oder glasähnliche Platten, wie Glaskeramik, häufig verwendet, um unterschiedlichen Zwecken zu dienen: Gemäß einem ersten Anwendungsfall soll eine Glaskeramik eines Kochfelds für gute Energieübertragung von der Heizquelle auf z.B. einen Topf dienen. Hierbei werden elektrische Heizquellen oder das Induktionsprinzip verwendet. Gemäß einem zweiten Anwendungsfall dient bei der Tür eines Gargeräts die Glasplatte, wobei häufig auch mehrere parallel angeordnete Glasscheiben verwendet werden, dazu, dass der Anwender durch die Scheiben das Gargut betrachten kann und gleichzeitig zur Temperaturisolation. In beiden Fällen muss eine Aufnahme für die Glasplatten oder glasähnlichen Platten bereitgestellt werden.

Ein Hausgerät nach dem Oberbegriff ist aus der EP 2 159 489 A2 bekannt.

Aufgabe der vorliegenden Erfindung ist, ein Hausgerät bereitzustellen, welche einen einfachen und kostengünstigen Aufbau aufweist und angesichts ihres mechanischen Aufbaus und ihres Erscheinungsbildes sowohl für ein Kochfeld als auch für die Tür eines Gargeräts geeignet ist.

Diese Aufgabe wird gelöst durch eine Trägerbaugruppe des erfindungsgemäßen Hausgerätes, mit einem metallischen flächigen Sichtkörper der eine im Wesentlichen rechteckförmige Hauptfläche und an zwei gegenüberliegenden Kanten der Hauptfläche eine Abwinkelung aufweist, die dem Sichtkörper eine dreidimensionale Gestalt verleiht. Erfindungsgemäß weist der Sichtkörper an den beiden weiteren Außenkanten eine Schnittkante auf, die direkt an die rechteckförmige Hauptfläche des Sichtkörpers angrenzt. Herkömmlich wird der flächige Sichtkörper an allen vier Seiten deshalb abgewinkelt, um dem flächigen Sichtkörper aufgrund der Verbesserung des Flächenträgheitsmoments eine höhere Stabilität zu geben. Erfinderisch wurde erkannt, dass dieser Arbeitsschritt auch wegfallen kann. Weiter ergibt sich aus diesem Aufbau, dass sich mehrere baugleiche Träger an den nicht derart bearbeiteten Flächen spaltfrei nebeneinander anordnen lassen. So wird ein flexibles Modulsystem geschaffen, bei dem auch unterschiedlich breite Module, insbesondere Kochmodule, in einer Arbeitsfläche einer Küchenzeile integriert werden können.

Es ist an den beiden weiteren Außenkanten des flächigen Sichtkörpers keine Abwinkelung, insbesondere keine Faltung, Falzung oder Bördelung vorgesehen. Auf diese Weise wird die Materialbearbeitung vereinfacht.

Gemäß einer Weiterbildung der Erfindung weist die Hauptfläche des Sichtkörpers eine fensterartige Öffnung auf. In dieser Öffnung kann im Fall der Verwendung der Trägerbaugruppe für ein Kochfeld eine Glaskeramikplatte und im Fall der Verwendung der Trägerbaugruppe für eine Backofentür eine Glasscheibe angeordnet sein.

Zusammengefasst wird hierbei ein Hausgerät mit einer Trägerbaugruppe mit einem metallischen flächigen Sichtkörper und mit einer U-förmigen Grundform bereitgestellt, bei der eine rechteckförmige Hauptfläche an zwei gegenüberliegenden Kanten eine Abwinkelung aufweist. Dabei umfasst die Hauptfläche eine fensterartige Öffnung, die von einer Glaskeramikplatte oder dergleichen oder von zumindest einer Glasscheibe verschlossen ist.

In einer bevorzugten Ausführungsform weist der metallische flächige Sichtkörper eine Materialstärke von mindestens 1,0 mm und höchstens 3,5 mm, vorzugsweise von mindestens 1,5 mm und höchstens 2,5 mm auf. Materialstärken von größer 3,5 mm lassen sich kaum noch in industriellem Maßstab bearbeiten und auch bei einer Materialstärke größer 2,5 mm ist die Bearbeitung bereits erschwert. Ferner steigen bei derartigen Materialstärken die Materialkosten deutlich stark an.

An zumindest einer der weiteren Außenkanten der Hauptfläche ist eine Querschnittsfläche des flächigen Sichtkörpers sichtbar. Die Sichtbarkeit bezieht sich insbesondere auf den Einbauzustand, bei der der flächigen Sichtkörper in ein passendes Hausgerät, wie ein Kochfeld oder eine Gargerätetür, eingebaut ist. Die Sichtbarkeit der Querschnitts- oder Stirnfläche bedeutet, dass keine Abwinkelung, insbesondere keine Faltung, Falzung oder Bördelung vorgenommen wurde und dass dieser Arbeitsschritt weggefallen ist, wodurch die Produktionskosten reduziert werden. Auch kann der Anwender auf diese Art unmittelbar die Dicke des flächigen Sichtkörpermaterials sehen, was ihm signalisiert, dass der flächige Sichtkörper ausreichende Festigkeit aufweist, dass er bspw. eine Gargerätetür auch mit Schwung zufallen lassen kann.

Weiterführend ist zwischen den beiden Abwinkelungen des Hautkörpers, zumindest im Bereich einer der weiteren Außenkanten der Hauptfläche, ein sichtbarer Füllkörper angeordnet. Im Bereich der betreffenden weiteren Außenkante des flächigen Sichtkörpers ist der vorzugsweise aus Kunststoff ausgeführte Füllkörper angeordnet. Der Füllkörper verhindert, dass Verschmutzungen unter den flächigen Sichtkörper gelangen können.

Eine Außenkontur des Füllkörpers ist an eine Innenkontur des Sichtkörpers angepasst. Damit liegt der Füllkörper direkt an dem Sichtkörper an, vorzugsweise auf seiner ganzen Länge.

Bevorzugt ist der Füllkörper von einer Blende gebildet. Bei der Blende handelt es sich um ein im Wesentlichen flaches Bauteil, das beispielsweise aus Kunststoff ausgeführt sein kann.

Der metallische flächigen Sichtkörper ist vorzugsweise aus korrosionsbeständigem Metallblech, beispielsweise aus Edelstahlblech oder aus Aluminiumblech, gefertigt. Als korrosionsbeständiges, d.h. insbesondere nicht rostendes Metall eignen sich viele Materialien wie Aluminium oder besondere Stahllegierungen. Stahl bringt den Vorteil einer hohen Festigkeit und einer verkratzungsunempfindlichen Oberfläche.

Das Metallblech des flächigen Sichtkörpers ist an dessen Hauptfläche und an zumindest einer Querschnittsfläche für den Anwender sichtbar. Durch die Sichtbarkeit des Metallblechs kann an dieser Stelle eine Oberflächenbeschichtung, wie z.B. Lackierung, eingespart werden kann.

Es kann eine vorzugsweise aus Glaskeramik ausgeführte Kochfeldplatte in einer fensterartigen Öffnung des Sichtkörpers angeordnet sein. In dem Kochfeld ist damit eine Glaskeramikplatte oder dergleichen von dem flächigen Sichtkörper umfasst.

Gegenstand der Erfindung ist auch ein Kochfeld mit einer oben beschriebenen Trägerbaugruppe, wobei eine vorzugsweise aus Glaskeramik ausgeführte Kochfeldplatte in einer fensterartigen Öffnung des Sichtkörpers angeordnet ist.

Gegenstand der Erfindung ist ebenfalls eine Gargerätetür mit einer oben beschriebenen Trägerbaugruppe, wobei ein vorzugsweise aus Glas ausgeführtes Sichtfenster der Gargerätetür in einer fensterartigen Öffnung des Sichtkörpers angeordnet ist.

Weiter Gegenstand der Erfindung ist ein kombiniertes Gargerät mit einer Gargerätetür und einem Kochfeld, jeweils gemäß obiger Beschreibung. Das kombinierte Gargerät kann dabei beispielsweise von einem Standherd gebildet sein. Ein kombiniertes Gargerät im Sinne der Erfindung ist ebenfalls eine Kombination aus einem eine Gargerätetür umfassenden Einbaubackofen und einem separatem Kochfeld. Wenn sowohl ein Kochfeld als auch eine Gargerätetür mit einem entsprechenden flächigen Sichtkörper verwendet werden, so ergeben sich neben dem Vorteil der einheitlichen optischen Erscheinung auch entsprechend erhöhte Kostenvorteile der Produktion durch einheitlichere Teile.

Im Folgenden wird die Erfindung mit Bezug auf die Zeichnungen anhand von bevorzugten Ausführungsformen beispielhaft beschrieben. Es zeigen:
- Fig. 1: ein Gargerät als ein Standgerät,
- Fig. 2: einen Ausschnitt aus einer Küchenzeile mit einem Kochfeld und
- Fig. 3: einen Ausschnitt von einer Küchenzeile mit der Darstellung einer Gargerätetür.

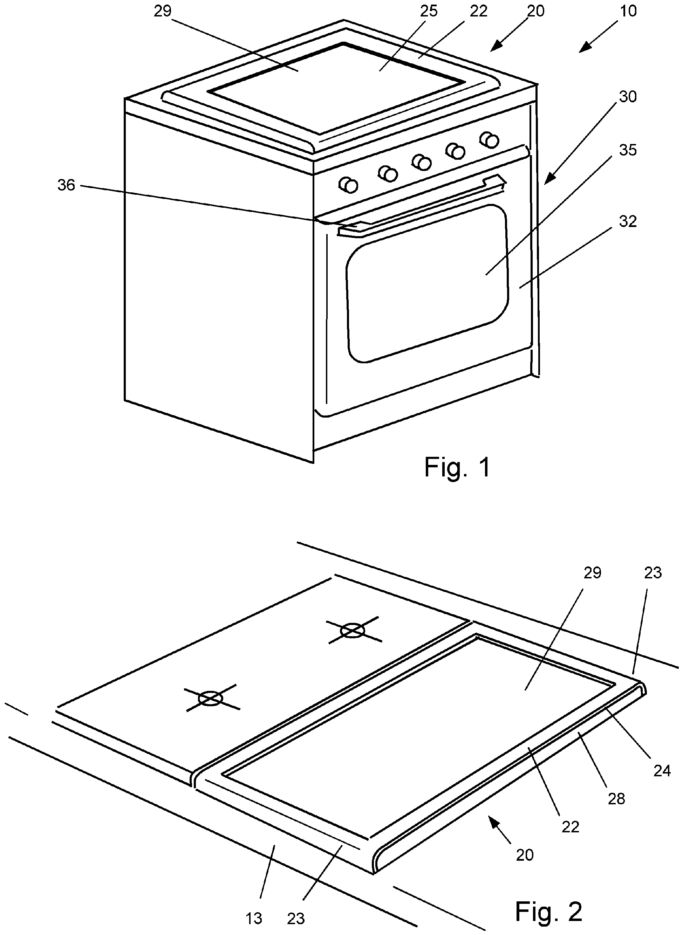

Fig. 1 zeigt ein Gargerät 10, welches ein Kochfeld 20 und einen Backofen aufweist. Die Ofenmuffel ist durch eine Ofentür 30 verschlossen. Die Ofentür lässt sich schenkend (nicht dargestellt) um eine horizontale Drehachse, die im unteren Bereich der Ofentür liegt, öffnen. Alternativ kann die Ofentür nach dem Schubladenprinzip zum Öffnen durch einen Parallelversatz nach vorne, also zum Anwender, verschoben werden (nicht dargestellt) oder um eine vertikale Achse schwenkbar sein (nicht dargestellt). Sowohl das Kochfeld 20, als auch die Ofentür 30 weisen einen U-förmig geformten flächigen Sichtkörper 22 bzw. 32 auf.

Fig. 2 zeigt eine Variante des Einbaus des Kochfelds 20 in eine Küchenzeile, die symbolisch durch die Arbeitsplatte 13 angedeutet ist. Die Arbeitsplatte 13 hat unterhalb des Kochfelds 20 eine Einbauöffnung (nicht dargestellt), die kleiner ist als die Grundfläche des Kochfelds 20. Das Kochfeld 20 hat einen flächigen Sichtkörper 22, der an dem vorderen und hinteren Bereich (gesehen aus Sicht eines Anwenders) Abwinkelungen 23 aufweist. Diese Abwinkelungen 23 sorgen für die U-förmige Grundform des flächigen Sichtkörpers 22. Die Abwinkelungen 23 beschreiben je einen 90° Winkel, so dass das Kochfeld 20 mit den Enden der beiden Flanken der U-Form auf der Arbeitsplatte 13 aufsteht. Der flächige Sichtkörper 22 ist aus Edelstahlblech der Dicke 1,8 mm gefertigt, wobei auch Dicken von 1,5 bis 3 mm bevorzugt einsetzbar sind. Diese Materialstärke ist deutlich höher als die allgemein für flächige Sichtkörper übliche Stärke, die bei ca. 0,8 mm liegt. Aufgrund der deutlich größeren Dicke wird eine erhöhte Verwindungssteifigkeit erzielt und die eingesetzte Glaskeramikplatte 29 gut geschützt. Die Schenkellänge der Abwinkelung 23, also die Distanz von der Oberseite des flächigen Sichtkörpers 22 bis zu der Arbeitplatte 23 beträgt mindestens 10 mm vorzugsweise 12 bis 18 mm.

An den Seiten des Kochfelds 20, an denen der flächige Sichtkörper 22 keine Abwinkelung 23 aufweist, liegen die Querschnittsflächen 24 des Sichtkörpers 22 frei. Im Bereich der Querschnittsflächen 24 ist unterhalb des Sichtkörpers 22 je ein Füllkörper 28 angeordnet, dessen Größe so angepasst ist, dass er die Innenkontur des U-förmigen flächigen Sichtkörpers 22 komplett ausfüllt. Der Füllkörper 28 kann bündig mit der Querschnittsfläche 24 des flächigen Sichtkörpers 22 angeordnet sein oder nach innen, also gemäß Fig. 2 nach links versetzt. Der Füllkörper 28 sorgt dafür, dass keine Verschmutzungen unter das Kochfeld 20 gelangen können und wird bevorzugt aus einem dunklen Kunststoff gefertigt. Wenn der flächige Sichtkörper 22 mit einer hohen Oberflächengüte (z.B. gebürstet) aus Edelstahl gefertigt ist, bietet er dem Kunden einen hochwertigen Eindruck. An der Querschnittsfläche 24 kann der Kunde unmittelbar die Dicke des Blechs sehen. Durch den farblichen Kontrast des Füllkörpers 28 zum hellen Metall wird der hochwertige Eindruck verstärkt. Die Glaskeramikplatte 29 ist über nicht dargestellte Befestigungsmittel an dem Sichtkörper 22 befestigt. Neben dem Kochfeld 20 können weitere baugleiche oder anders breite elektrische Kochfelder (nicht dargestellt) oder ein Gaskochfeld 15 angeordnet sein. Wenn diese weiteren Kochfelder nach dem gleichen Prinzip des flächigen Sichtkörpers 22 aufgebaut sind, so lassen sie sich ohne einen Absatz aneinanderreihen, so dass ein ganzheitlicher Eindruck entsteht. Auch sind keine Fugen vorhanden, in denen sich Schutz sammeln könnte.

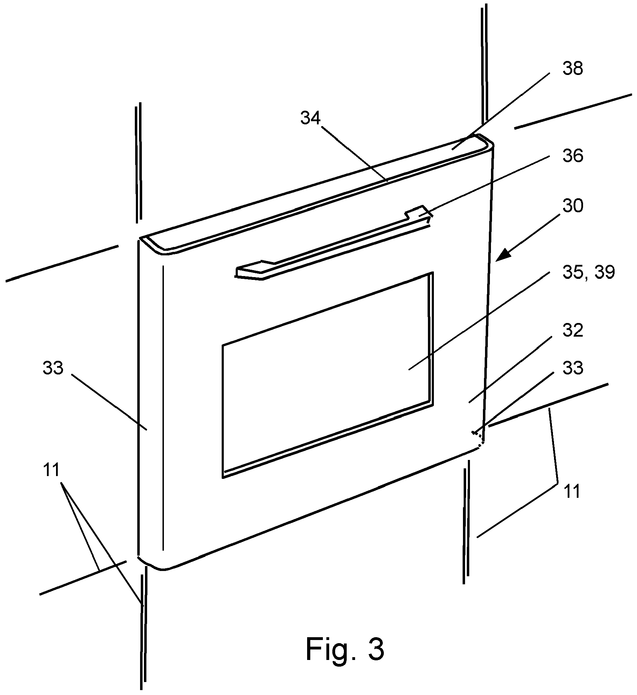

Fig. 3 zeigt eine Ofentür 30. Aus Gründen der Übersichtlichkeit sind die Bedienelemente des Ofens nicht dargestellt. Vielmehr werden mit Strichen benachbarte Hausgeräte 11 oder Elemente einer Küchenzeile, wie z.B. Küchenschränke angedeutet. Die Ofentür 30 kann mit dem Griff 36 geöffnet werden. In der geschlossenen Stellung der Ofentür 30 liegt der flächige Sichtkörper 32 komplett vor der Ebene, welche durch die benachbarten Hausgeräte 11 definiert ist. So kann der Anwender unmittelbar die Blechdicke der Querschnittsfläche 34 des flächigen Sichtkörpers 32 sehen. Da das Blech die identische Dicke zu dem flächigen Sichtkörper 22 des Kochfelds hat, erhält er auch hier den Eindruck eines hochwertigen Produkts. Im Bereich der Öffnung 35 des flächigen Sichtkörpers 32 befinden sich mehrere Glasscheiben 39, die es erlauben, in die Muffel zu sehen und die als Temperaturisolierung dienen. Fig. 3 zeigt, dass die Abwinkelungen 33 des U-förmigen flächigen Sichtkörpers 32 an den linken und rechten Seiten der Ofentür 30 liegen. Alternativ können sie auch oben und unten liegen. Die Öffnung 35 ist gemäß Fig. 3 rechteckförmig dargestellt. Sie kann auch abgerundet sein, wie es in Fig. 1 gezeigt ist.

Der flächige Sichtkörper 32 der Ofentür ist nach dem gleichen Prinzip wie der flächige Sichtkörper 22 des Kochfelds aufgebaut. So wird ein einheitlicher Gesamteindruck erzielt, insbesondere wenn die Breite der flächigen Sichtkörper 22, 32, also der Abstand ihrer Abwinkelungen identisch ist. Ferner wird dadurch erreicht, dass durch die Vereinheitlichung die Produktionskosten reduziert werden.

### Bezugszeichen:

- 10: Hausgerät, Gargerät
- 11: benachbarte Hausgeräte
- 13: Arbeitsplatte
- 15: Gaskochfeld
- 20: Trägerbaugruppe, Kochfeld
- 22: flächiger Sichtkörper des Kochfelds
- 24, 34: Querschnittsfläche
- 23, 33: Abwinkelung
- 25, 35: fensterartige Öffnung
- 28, 38: Füllkörper
- 29: Glaskeramikplatte
- 30: Trägerbaugruppe, Ofentür
- 32: flächiger Sichtkörper der Ofentür
- 39: Glasscheibe
- 36: Griff

## Patentansprüche

1. Hausgerät (10), aufweisend eine Trägerbaugruppe (20,30) mit einem metallischen flächigen Sichtkörper (22, 32), der eine im Wesentlichen rechteckförmige Hauptfläche und an zwei gegenüberliegenden Kanten der Hauptfläche jeweils eine Abwinkelung (23, 33) aufweist, die dem Sichtkörper (22, 32) eine dreidimensionale Gestalt verleiht, wobei der Sichtkörper (22, 32) an den beiden weiteren Außenkanten eine Schnittkante aufweist, die direkt an die rechteckförmige Hauptfläche des Sichtkörpers angrenzt, **dadurch gekennzeichnet, dass** zwischen den beiden Abwinkelungen des Sichtkörpers (22, 32), zumindest im Bereich einer der weiteren Außenkanten der Hauptfläche, ein sichtbarer Füllkörper (28, 38) angeordnet ist und dass eine Außenkontur des Füllkörpers (28, 38) an eine Innenkontur des Sichtkörpers (22, 32) angepasst ist.

2. Hausgerät (10)nach Anspruch 1, **dadurch gekennzeichnet, dass** der Sichtkörper (22, 32) an den beiden weiteren Außenkanten keine Abwinkelung aufweist.

3. Hausgerät (10)nach Anspruch 1 oder 2, **dadurch gekennzeichnet, dass** die Hauptfläche des Sichtkörpers (22, 32) eine fensterartige Öffnung (25, 35) aufweist.

4. Hausgerät (10)nach Anspruch 3, **dadurch gekennzeichnet, dass** in der fensterartigen Öffnung (25, 35) eine Glaskeramikplatte (29) oder eine Glasscheibe (39) angeordnet ist.

5. Hausgerät (10)nach einem der Ansprüche 1 bis 4, **dadurch gekennzeichnet, dass** der metallische flächigen Sichtkörper (22, 32) eine Materialstärke von mindestens 1,0 mm und höchstens 3,5 mm, vorzugsweise von mindestens 1,5 mm und höchstens 2,5 mm aufweist.

6. Hausgerät (10)nach einem der Ansprüche 1 bis 5, **dadurch gekennzeichnet, dass** an zumindest einer der weiteren Außenkanten der Hauptfläche eine Querschnittsfläche (24, 34) des flächigen Sichtkörpers (22, 32) sichtbar ist.

7. Hausgerät (10)nach Anspruch 5 oder 6, **dadurch gekennzeichnet, dass** der Füllkörper (28, 38) von einer Blende gebildet ist.

8. Hausgerät (10)nach einem der vorangegangenen Ansprüche, **dadurch gekennzeichnet, dass** der metallische flächigen Sichtkörper (22, 32) aus korrosionsbeständigem Metallblech, vorzugsweise aus Edelstahlblech oder aus Aluminiumblech, gefertigt ist.

9. Hausgerät (10)nach Anspruch 8, **dadurch gekennzeichnet, dass** das Metallblech des flächigen Sichtkörpers (22, 32) an dessen Hauptfläche und an zumindest einer Querschnittsfläche (24, 34) für den Anwender sichtbar ist.

10. Hausgerät (10) nach einem der vorhergehenden Ansprüche, aufweisend ein Kochfeld (20) mit einer Trägerbaugruppe (20), wobei eine Kochfeldplatte (29) in einer fensterartigen Öffnung des Sichtkörpers (22) angeordnet ist.

11. Hausgerät (10) nach Anspruch 10, wobei die Kochfeldplatte (29) aus Glaskeramik ausgeführt ist.

12. Hausgerät (10) nach einem der vorhergehenden Ansprüche, aufweisend eine Gargerätetür mit einer Trägerbaugruppe (30), wobei ein Sichtfenster (39) der Gargerätetür in einer fensterartigen Öffnung des Sichtkörpers (32) angeordnet ist.

## Claims

1. Household appliance (10), having a support assembly (20, 30) with a planar metal viewing body (22, 32), which has a substantially rectangular main surface and one angled section (23, 33) in each case on two opposite edges of the main surface, which gives the viewing body (22, 32) a three-dimensional shape, wherein the viewing body (22, 32) has a cut edge on the two further outer edges, which directly adjoins the rectangular main surface of the viewing body, **characterised in that** a visible filler body (28, 38) is disposed between the two angled sections of the viewing body (22, 32) at least in the region of one of the further outer edges of the main surface and **in that** an outer contour of the filler body (28, 38) is matched to an inner contour of the viewing body (22, 32).

2. Household appliance (10) according to claim 1, **characterised in that** the viewing body (22, 32) has no angled section on the two further outer edges.

3. Household appliance (10) according to claim 1 or 2, **characterised in that** the main surface of the viewing body (22, 32) has a window-type opening (25, 35).

4. Household appliance (10) according to claim 3, **characterised in that** a glass ceramic plate (29) or a glass pane (39) is disposed in the window-type opening (25, 35).

5. Household appliance (10) according to one of claims 1 to 4, **characterised in that** the planar metal viewing body (22, 32) has a material thickness of at least 1.0 mm and at most 3.5 mm, preferably at least 1.5 mm and at most 2.5 mm.

6. Household appliance (10) according to one of claims 1 to 5, **characterised in that** a cross-sectional surface (24, 34) of the planar viewing body (22, 32) is visible on at least one of the further outer edges of the main surface.

7. Household appliance (10) according to claim 5 or 6, **characterised in that** the filler body (28, 38) is formed by a screen.

8. Household appliance (10) according to one of the preceding claims, **characterised in that** the planar metal viewing body (22, 32) is made of corrosion-resistant sheet metal, preferably stainless steel sheet or aluminium sheet.

9. Household appliance (10) according to claim 8, **characterised in that** the sheet metal of the planar viewing body (22, 32) is visible to the user at its main surface and at least one cross-sectional surface (24, 34).

10. Household appliance (10) according to one of the preceding claims, having a cooktop (20) with a support assembly (20), wherein a cooktop plate (29) is disposed in a window-type opening of the viewing body (22).

11. Household appliance (10) according to claim 10, wherein the cooktop plate (29) is made of glass ceramic.

12. Household appliance (10) according to one of the preceding claims, having a cooking appliance door with a support assembly (30), wherein a viewing window (39) of the appliance door is disposed in a window-type opening of the viewing body (32).

## Revendications

1. Appareil ménager (10), présentant un bloc de support (20, 30) avec un corps de visualisation plat métallique (22, 32), qui présente une surface principale pour l'essentiel rectangulaire et au niveau de deux arêtes opposées de la surface principale respectivement une inclinaison (23, 33), qui confère au corps de visualisation (22, 32) une configuration tridimensionnelle, dans lequel le corps de visualisation (22, 32) présente au niveau des deux arêtes externes supplémentaires une arête de découpe qui est directement adjacente à la surface principale rectangulaire du corps de visualisation, **caractérisé en ce que**, entre les deux inclinaisons du corps de visualisation (22, 32), au moins dans la zone d'une des arêtes externes supplémentaires de la surface principale est disposé un corps de remplissage visible (28, 38) et **en ce qu'**un contour externe du corps de remplissage (28, 38) est adapté à un contour interne du corps de visualisation (22, 32).

2. Appareil ménager (10) selon la revendication 1, **caractérisé en ce que** le corps de visualisation (22, 32) ne présente aucune inclinaison au niveau des deux arêtes externes supplémentaires.

3. Appareil ménager (10) selon la revendication 1 ou 2, **caractérisé en ce que** la surface principale du corps de visualisation (22, 32) présente une ouverture de type fenêtre (25, 35).

4. Appareil ménager (10) selon la revendication 3, **caractérisé en ce que** dans l'ouverture de type fenêtre (25, 35) est disposée une plaque de vitrocéramique (29) ou une vitre (39).

5. Appareil ménager (10) selon l'une des revendications 1 à 4, **caractérisé en ce que** le corps de visualisation plat métallique (22, 32) présente une épaisseur de matériau d'au moins 1,0 mm et d'au plus 3,5 mm, de préférence d'au moins 1,5 mm et d'au plus 2,5 mm.

6. Appareil ménager (10) selon l'une des revendications 1 à 5, **caractérisé en ce que**, au niveau d'au moins une des arêtes externes supplémentaires de la surface principale une surface en coupe transversale (24, 34) du corps de visualisation plat (22, 32) est visible.

7. Appareil ménager (10) selon la revendication 5 ou 6, **caractérisé en ce que** le corps de remplissage (28, 38) est formé par un cadre.

8. Appareil ménager (10) selon l'une des revendications précédentes, **caractérisé en ce que** le corps de visualisation plat métallique (22, 32) est fabriqué à partir d'une tôle métallique résistant à la corrosion, de préférence à partir d'une tôle en acier inoxydable ou à partir d'une tôle en aluminium.

9. Appareil ménager (10) selon la revendication 8, **caractérisé en ce que** la tôle métallique du corps de visualisation plat (22, 32) est visible au niveau de la surface principale de celui-ci et au niveau d'au moins une surface en coupe transversale (24, 34) pour l'utilisateur.

10. Appareil ménager (10) selon l'une des revendications précédentes, présentant une table de cuisson (20) avec un bloc de support (20), dans lequel une plaque de cuisson (29) est disposée dans une ouverture de type fenêtre du corps de visualisation (22).

11. Appareil ménager (10) selon la revendication 10, dans lequel la plaque de cuisson (29) est réalisée en vitrocéramique.

12. Appareil ménager (10) selon l'une des revendications précédentes, présentant une porte d'appareil de cuisson avec un bloc de support (30), dans lequel une fenêtre de visualisation (39) de la porte d'appareil de cuisson est disposée dans une ouverture de type fenêtre du corps de visualisation (32).
